# EUROPEAN PATENT APPLICATION

(11) **EP 2 208 530 A1**
(43) Date of publication of application: **21.07.2010**
(21) Application number: 08172813.1
(22) Date of filing: 23.12.2008
(51) Int. Cl.: B01L 3/00, F16K 99/00

(54) **On-Chip micro pumping system**

(71) Applicant: DEBIOTECH S.A., 1004 Lausanne (CH)
(72) Inventor: Bianchi, François, 1920 Martigny (CH); Metref, Lynda, 1030 Bussigny (CH)
(74) Representative: Grosfillier, Philippe

(57) **Abstract**

On chip step by step actuation system comprising a fluid line in fluid communication with an actuating unit, said actuating unit comprising a space including a plurality of expandable elements, each of said expandable elements being located and adapted to be individually actuated in such a way that the expansion of at least one of said expandable elements results in a volume reduction of said space in a step wise manner.

## Description

### Field of invention

The present invention relates to a on chip micro pumping system based on a step by step actuation principle, i.e. a liquid or a gas is moved step by step within the system.

### State of the art

Due to the rise of interest for "Lab-on-chip systems" [1], on chip actuation of liquids has been widely studied in the last decade. Different methodologies have been proposed and they can be sorted in two main categories: mechanical and non-mechanical actuation [2]. The first category are mechanical pumps. They use moving parts such as valves and membranes to move liquids. Those systems are mainly based on macroscale principles, scaled down to the micrometer scale. Many mechanical micropumps have been developed such as valve membrane pumps [3], peristaltic pumps [4], valveless rectification pumps [5] and rotary pumps [6]. The second category relies on all other means to apply a force on a liquid to actuate it. Most of the principles used are specific to the micrometer scale [2]. Electrical energy can be used to drive the liquid such as in electrohydrodynamic systems [7], electro-osmotic flows [8] and electro-wetting systems [9]. Electrical energy can also be used to induce another chemical or physical reaction such as electrochemical gas generation. This reaction can take place in the liquid itself [10] or in a intermediate medium [11, 12]. Using a gas under pressure is also used in pneumatic pressure actuation. A pneumatic pressure is applied on a reservoir holding the liquid, transferring a force driving the liquid in the channels [13].

Between these two categories, one can find swelling materials. These have no mechanical parts, but rely on the volume change and the mechanical application of a pressure on the liquid to actuate it. Systems using hydrogel [14, 15] and polyethylene glycol (PEG) [16] have been described. Those may be electrically, chemically or thermally activated. Volume expansion based on thermal activation can also be done by using an expandable matrix holding a blowing agent. This kind of thermoexpandable composite made of polydimethyl siloxane (PDMS) holding thermo expansible beads has been used to make complete microfluidic systems with fluidic actuators and valves [17].

### General description of the invention

The present invention offers the opportunity to use an expandable matrix with volume change capability to move step by step a liquid or a gas having a volume going from the nano to micro liter range.

To this effect the invention refers to an on chip step by step actuation system comprising a fluid line in fluid communication with an actuating unit, said actuating unit comprising a space including a plurality of expandable elements, each of said expandable element being adapted to be individually actuated.

In one embodiment , the expandable matrix is a thermoexpansible polymer such as the one disclosed in patent applications W02007/060636 A2 and WO 2007/138227 A1

In another embodiment , the expandable matrix is an electro active polymer such as the one disclosed in the literature.[18]

Advantageously the actuation system is integrated into the fluidic chip as well as the cavities that are used to define the flow steps.

In one preferred embodiment the fluidic chip contain a certain number of empty and filled cavities with different size allowing flexibility in the direction and size of the steps.

In another embodiment the expandable membrane is directly activated in the channel by local activating parts.

In another embodiment the expandable membrane is deposited locally on the channel over the activating elements.

Advantageously the present invention may be used to induce the movement of a blood sample in a micro-channel in order to develop a test strip for coagulation testing. The present invention allows to reduce the size and the amount of sample and reactive needed.

The present invention provides several advantages with respect to state-of-the-art devices. The utilization of cavities with precise volume in combination with expandable membrane integrated on the same micro-chip provides a simple and reliable method for integrated microfluidic systems for diagnostic and chemical analysis applications, where fluidic actuation by steps from nano to microliter range is required where the portability and the simplicity are key assets for the device.

### Detailed description of the invention

The invention is discussed below in a more detailed way with examples illustrated by the following figures.
Figure 1 shows a schematic of one embodiment of the invention.
Figure 2 is a schematic of the actuation principle using micro-cavities with a continuous expandable film.

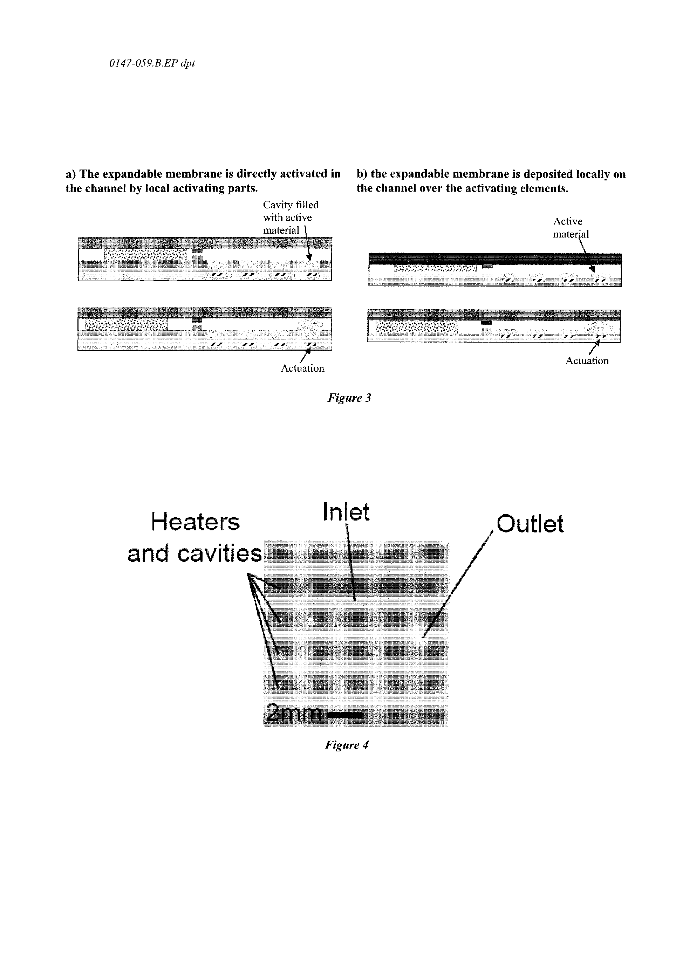

Figure 3 is a schematic of the actuation principle using alternative design to improve expansion resolution by limiting heat diffusion in the expandable membrane. (a) In the first design the expandable membrane is cast in individual micro-cavities or (b) deposited discontinuously on the actuation.
Figure 4 is a picture of a device according to the invention. Design and operation of the miniaturized system. The cavities and the associated heaters on the left of the picture are connected to the main channel by a tree connection network.

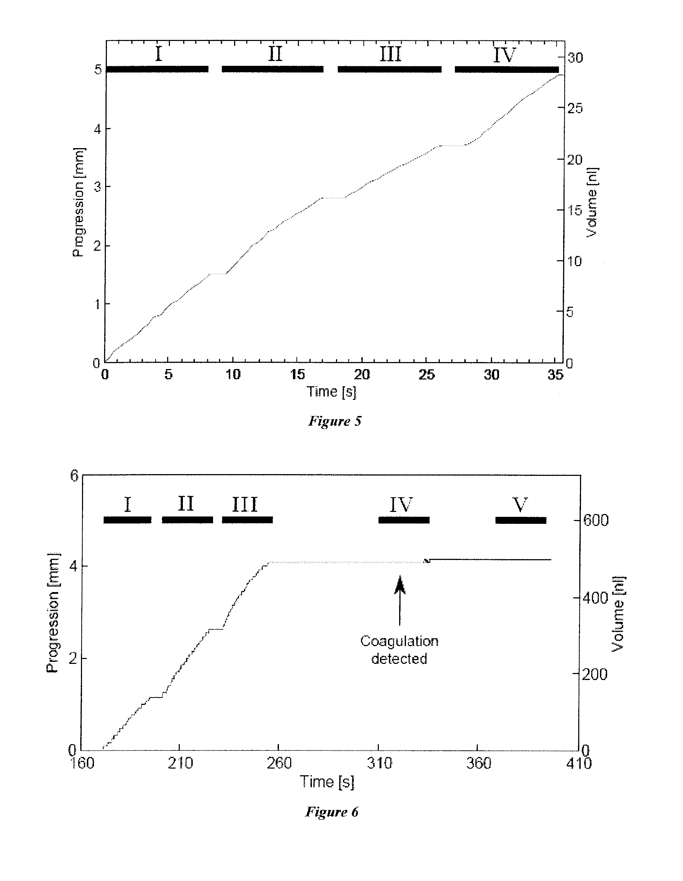

Figure 5 shows a flow profile obtained with device of figure 4, where Area I to IV correspond to the actuation duration. The inlet is closed and the heaters are sequentially powered providing the actuation profile step by step.
Figure 6: shows the actuation profile of recalcified blood using a step by step displacement mode system as illustrated in Figure 4. Heaters I, II, III, IV and V are activated sequentially as indicated by horizontal thick lines. When heaters I, II and II are powered, the blood moves freely in the channel. For heaters IV and V the blood has coagulated and does not move anymore.

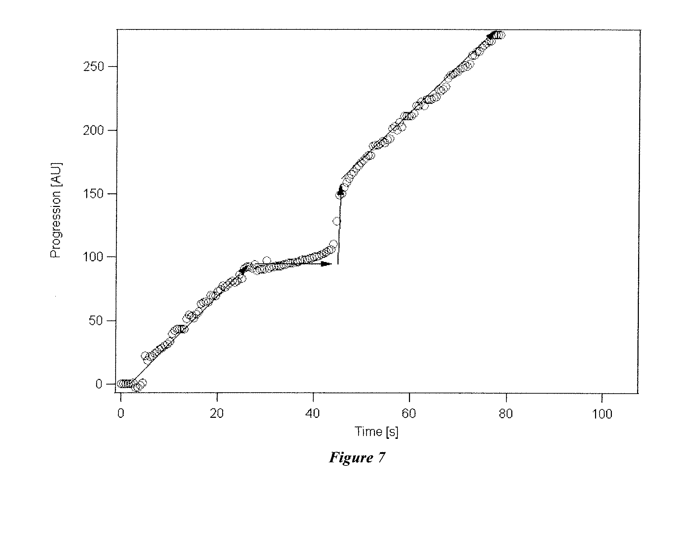

Figure 7: shows the actuation profile of recalcified blood using a continuous displacement mode. When the coagulation occurs, the blood flow rate is significantly diminished by not completely stopped. In a continuous actuation mode, an overpressure is built up in the channel up to the value that the coagulation plug can stand. Over this level, the blood clot loose to release the pressure and the blood front resume its movement. As a results a step by step displacement prevent to build up an overpressure that can affect the measurement of the blood coagulation.

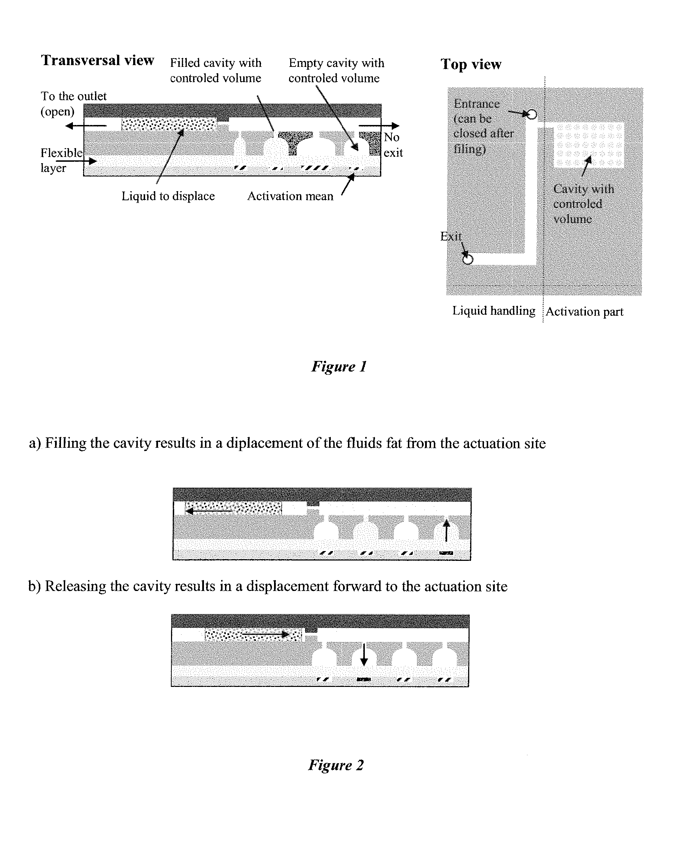

Figure 1 illustrates a schematic of the system. It is mainly composed of a layer containing channels in which the liquid can be moved, with a layer comprising microcavities whose the various geometries (large and small) are precisely known, a layer of active material including the expandable membrane and a layer comprising the mean of activation. The layer comprising channels and including microcavities can also form a single layer. The layer comprising channels is split into two parts: a first part contains one or more channels / cavities in which the liquid is moved, the second part contains one or more channels connected to microcavities. The fluid intermediate pushing the liquid must be able to move from one part to the other.

Actuation is produced locally in a microcavity as described in Figure 2. The geometry of the microcavity is designed to be fully completed when the activation of the material. The actuation can performed in two direction: (1) if the cavity is free of expandable material in its initial state, when activating the material the cavity is filled by the material, the fluid in the cavity is expelled, forcing the displacement of the liquid; (2) if the cavity is filled with the material in its initial state, when activating the material, the cavity is released from the expandable material, the fluid is aspired in the cavity, forcing the displacement of the liquid.

### Bibliography

[1] T.A. Franke and A. Wixforth. Microfluidics for miniaturized laboratories on a chip. ChemPhysChem, 9(15):2140-2156, 2008.
[2] N.-T. Nguyen, X. Huang, and T.K. Chuan. Mems-micropumps: A review. Journal of Fluids Engineering, Transactions of the ASME, 124(2):384-392, 2002.
[3] H.T.G. van Lintel, F.C.M. van De Pol, and S. Bouwstra. A piezoelectric micropump based on micromachining of silicon. Sensors and Actuators, 15(2):153-167, 1988.
[4] J.G. Smits. Piezoelectric micropump with three valves working peristaltically. Sensors and Actuators: A. Physical, 21(1-3):203-206, 1990.
[5] E. Stemme and G. Stemme. A valveless diffuser/nozzle-based fluid pump. Sensors and Actuators: A. Physical, 39(2):159-167, 1993.
[6] Chong H. Ahn and Mark G. Allen. Fluid micropumps based on rotary magnetic actuators. In Proceedings of the IEEE Micro Electro Mechanical Systems, pages 408-412, 1995.
[7] S.F. Bart, L.S. Tavrow, M. Mehregany, and J.H. Lang. Microfabricated electrohydrodynamic pumps. Sensors and Actuators: A. Physical, 21(1- 3):193-197, 1990.
[8] D.Jed Harrison, Andreas Manz, and Paul G. Glavina. Electroosmotic pumping within a chemical sensor system integrated on silicon. In Transducers '91, pages 792-795, 1991.
[9] Hirofumi Matsumoto and James E. Colgate. Preliminary investigation of micropumping based on electrical control of interfacial tension. In Proceedings. IEEE Micro Electro Mechanical Systems-An Investigation of Micro Structures, Sensors, Actuators, Machines, pages 105-110, 1990.
[10] M. Lewandowski, D.A. Ateya, A.A. Shah, and S.Z. Hua. Sequential electrolytic bubble-based micro-pump dosing system. In American Society of Mechanical Engineers, Micro Electromechanical Systems Division Publication (MEMS), volume 5, pages 379-383, 2003.
[11] S. B"ohm, B. Timmer, W. Olthuis, and P. Bergveld. Closed-loop controlled electrochemically actuated micro-dosing system. Journal of Micromechanics and Microengineering, 10(4):498-504, 2000.
[12] L. Metref, F. Herrera, D. Berdat, and M.A.M. Gijs. Contactless electrochemical actuator for microfluidic dosing. Journal of Microelectromechanical Systems, 16(4):885-892,2007.
[13] T. Braschler, L. Metref, R. Zvitov-Marabi, H. Van Lintel, N. Demierre, J. Theytaz, and P. Renaud. A simple pneumatic setup for driving microfluidics. Lab on a Chip - Miniaturisation for Chemistry and Biology, 7(4):420-422, 2007.
[14] J. Hoffmann, M. Plo?tner, D. Kuckling, and W.-J. Fischer. Photopatterning of thermally sensitive hydrogels useful for microactuators. Sensors and Actuators, A: Physical, 77(2):139 144, 1999.
[15] D.J. Beebe, J.S. Moore, J.M. Bauer, Q. Yu, R.H. Liu, C. Devadoss, and B.-H. Jo. Functional hydrogel structures for autonomous flow control inside microfluidic channels. Nature, 404(6778):588-590, 2000.
[16] G.V. Kaigala, V.N. Hoang, and C.J. Backhouse. Electrically controlled microvalves to integrate microchip polymerase chain reaction and capillary electrophoresis. Lab on a Chip - Miniaturisation for Chemistrym and Biology, 8(7):1071-1078, 2008.
[17] B. Samel, V. Nock, A. Russom, P. Griss, and G. Stemme. A disposable lab-on-a-chip platform with embedded fluid actuators for active nanoliter liquid handling. Biomedical Microdevices, 9(1):61-67, 2007.
[18] Paper 4695-02, Proceedings of the SPIE Smart Structures and Materials Symposium, EAPAD Conference, San Diego, CA, March 18-21, 2002

## Claims

1. On chip step by step actuation system comprising a fluid line in fluid communication with an actuating unit, said actuating unit comprising a space including a plurality of expandable elements, each of said expandable elements being located and adapted to be individually actuated in such a way that the expansion of at least one of said expandable elements results in a volume reduction of said space in a step wise manner.

2. Actuation system according to claim 1 wherein said space comprises a plurality of micro-cavities which are adapted to contain said expandable elements.

3. Actuation system according to claim 1 or 2 wherein each expandable element is adapted to be either in an expanded or unexpanded state in a reversible manner, allowing thereby a liquid or a gas in said fluid line to move in both directions.

4. Actuation system according to one of the previous claims in combination with a microneedle array.

5. Actuation system according to the previous claim comprising an array of reservoirs that can be individually actuated for step by step sequential injections.

6. Actuation system according to one of the previous claims comprising one expandable membrane, wherein said membrane is a polymer, ceramic, gel, metal or a combination thereof.

7. Actuation system according to the previous claim wherein said membrane is casted in a cavity.

8. Actuation system according to claim 6 wherein said membrane is casted in a channel with micrometric procession using e.g. ink jet deposition.

9. Actuation system according to one of the previous claims comprising activating elements for activating said expandable elements, wherein each of said activation elements is thermal, optic, electric, chemical, pneumatic, electrochemical or a combination thereof.

10. Use of an actuation system as defined in one of the previous claims for performing blood coagulation testing.

11. Use according to claim 10 wherein the first displacement allow to place the blood in one well controlled step onto a reactive located in the channel.

12. Use according to claim 11 wherein the second step is smaller than the first one.

13. Use according to claim 12 wherein the third step is of the same magnitude than the second one but in the opposite direction.

14. Use according to one of claims 10 to 13 wherein the time between two steps is adapted to facilitate the coagulation of the blood mechanism in the channel.
